# EUROPEAN PATENT APPLICATION

(11) **EP 1 276 059 A2**
(43) Date of publication of application: **15.01.2003**
(21) Application number: 02254896.0
(22) Date of filing: 11.07.2002
(51) Int. Cl.: G06F 17/30

(54) **Data processing system**

(30) Priority: 11.07.2001 US 304520 P
(71) Applicant: ROHM AND HAAS COMPANY, Philadelphia, Pennsylvania 19106-2399 (US)
(72) Inventor: Adler, Marc Stephen, Wynnwood, Pennsylvannia 19096 (US); Johnson, Stephen E., Warrington, Pennsylvania 18976 (US)
(74) Representative: Kent, Venetia Katherine

(57) **Abstract**

A data processing system comprising an interface, a query builder connected to the interface for receiving the factual information and for building a search query describing the innovation, a search engine connected to the interface and to the query builder, for selecting a database and accessing this database via a transmission network and for searching the query in the database, a relevancy filter for filtering the search result provided by the search engine, means for comparing the search query with the filtered prior art output by the relevancy filter and a statutory analyzer for analyzing the comparison. A computer implemented electronic records system and a data processing system for automatically maintaining an electronic laboratory records system and a corresponding method, and to a computer program product directly loadable into the internal memory of a computing apparatus or network.

## Description

The present invention relates to a data processing system, a method in a data processing system, a data processing system automatically maintaining an electronic laboratory records system and a corresponding method, and to a computer program product directly loadable into the internal memory of a computer.

Patent protection, as envisioned in the United States Constitution, the laws of the European Community, and other countries and jurisdictions, provides several strategic and economic advantages to inventors and the public. Strategically, a patent is useful to an inventor to exclude others from making, using, offering for sale, importing or selling products or services within the scope of the inventor's patent claims. This exclusive right creates an opportunity for the inventor, for a limited time, to seek to gain a competitive advantage in the marketplace. Patents may also be useful to generate revenue for the inventor by licensing the patent rights to another. In addition, patents may be cross-licensed with other patent owners to gain access to useful patented technologies owned by others. Thus, a patent owner may leverage a patent or a portfolio of patents in a number of advantageous ways.

In order to obtain a patent grant, the inventor is required to describe the invention to the public in the patent in such a clear, concise and exact ways as to enable others who have ordinary skill in the art to which the invention pertains to make use of the invention and thereby convey the benefit of the patent to the public at the end of the patent term or to a licensee during the patent term.

Many creative individuals and companies seek to protect their innovations with patents rather than attempting to maintain them as secrets. In order to decide whether or not an innovation warrants patent protection, the prospective patentee (also referred to as the applicant) must determine whether the innovation meets the requirements of specific patent statutes, namely whether the innovation is new, useful and non-obvious. In addition to determining whether a new innovation is susceptible to being patented, the innovator must also determine whether the innovation, if made, used or sold, will not infringe the valid patent rights of others. A patent owner must also be able to determine if the owner's or a third party's patent may, subsequent to being granted by the patent office, be found to be invalid by a court of competent jurisdiction (hereinafter referred to as "invalidate"), such as the Court of Appeals for the Federal Circuit (CAFC) for example, because it lacks novelty in view of the disclosures contained in a prior publication that was not considered by a particular patent office that granted the patent. A patent owner also needs to be able to determine if products or processes sold or commercially used by others without the owner's permission are infringing the owner's patent claims.

Accordingly, innovators typically institute processes, alone or with the assistance of qualified patent attorneys and agents, registered to practice before a specific Patent Office, to evaluate each new development to determine both the freedom from potential infringement and patentability of the innovation, or namely whether the innovation can be made, used or sold freely without infringing others patents, and whether patent protection for the innovation itself is legally possible and warranted. Such processes also routinely examine competitive products to determine if they infringe the patentee's patent claims, as well as examining newly uncovered prior publications that may come to light years after the patent is granted to determine if the publication would be found to render the claims of the patent invalid.

A qualified patent attorney is required to assess the innovation and provide the innovator with a legal opinion on infringement and validity questions. These opinions require an understanding of the innovation and how and where they may be made, used or sold, the claims of existing patents defining the rights of other patent owners, the patent laws of a specific country (*e*.*g*. United States Code of Regulations, Title 35 *et seq*, known as 35 USC *et seq*) and common law decisions that serve as precedent for the application of the patent laws and rules to factual situations. A qualified patent attorney or patent agent is also typically needed to provide the innovator with an analysis of and/or an opinion on the question of the patentability of an innovation. This analysis/opinion is also based on an understanding of the innovation to that patented or claimed in an existing patent and to relevant patent laws, but such assessments also involve some additional issues. For a patentability opinion, the attorney or agent is concerned with the facts regarding the earliest conception of the idea, how or whether the idea has been actually reduced to practice in an experiment or working model, what actions the innovator or others have taken regarding the public disclosure of the innovation, what steps have been taken in the development and sale of the innovation, and the descriptions contained in all prior worldwide publications relevant to the innovation.

In determining whether an innovation is free from infringing others patent rights and is patentable in its own right, the qualified patent professional must determine whether the various descriptions of the innovation is encompassed by, or in patent jargon literally "reads on", all the claimed elements of one or more non-expired, and in force, patents in the country where the innovator desires to make, use or sell the invention. A similar analysis is required whenever the question of whether another's product or process may infringe one or more claims of the innovator's patent and to determine whether a newly uncovered prior publication might be used to invalidate the claims of an existing patent. Infringement analysis is country specific, and requires the analysis of the in force patents in each of the countries where the product, process or service will be made, used or sold in view of the laws, rules and common law, if applicable, of that country. If it is determined that an infringement in one or more countries would result from any one of these acts, the entity has a few options. The entity whose product or process is determined to infringe a patent may choose to discontinue its plan to use the innovation in that country or countries, attempt to "design around" the pre-existing patent such as for example by redesigning, reformulating or reconfiguring the innovation in some way to avoid the possibility of infringement, both literal infringement and infringement under the doctrine of equivalents, if available, seek to find a prior publication that discloses the same invention and thereby invalidates that patent, or seek to procure a license from the patent holder to practice the innovation.

In determining the patentability of the innovation or in determining whether a patent is valid as granted, the qualified attorney or agent must decide whether the innovation to be patented, or defined by the patent whose validity is in question, is new or novel and not disclosed in one or more prior patents or publications. Furthermore, the attorney or agent must also determine whether the innovation for which a patent is sought, or whose validity is being questioned, was known or used by others, or was in public use or sale before certain dates established by patent statutes (*e*.*g*. 35 USC section 102). In addition to determining whether the innovation for which a patent is being sought is new or novel, the practitioner must also determine the more subjective question of whether the invention was not obvious to one of ordinary skill in the art as a whole at the time it was made in view of the teachings or suggestions contained in prior publications (*e*.*g*. 35 USC section 103).

The process of determining whether a particular innovation is both free from infringement and patentable, and whether an existing patent was validly granted, requires a thorough search of all relevant prior publications, including prior patents, that could disclose or possibly teach or suggest the innovation to one of ordinary skill in the subject area most closely related to the innovation. The primary source for the infringement determination, as well as a starting point for patentability and validity determinations, are previously issued patents. Today, these patents are maintained in public databases having a rudimentary search engine which allows a user to perform searches, including for example, databases maintained by the U.S. Patent and Trademark Office (USPTO), the European Patent Office (EPO), the Japanese Patent Office (JPO) the World Intellectual Property Organization (WIPO) and databases maintained by private entities. For infringement searches only those patents, and specifically only the claims of those patents, that are valid, that have not expired and remain in force in the country where the product, process or service is to be made, used or sold are relevant to the analysis. For the patentability and validity determinations all publications, including patents and other published documents from anywhere in the world, are relevant to determine whether the innovation is patentable, or whether the claims of a granted patent are invalid as not being novel.

A patent attorney or agent typically searches one or more patent databases for relevant prior patents by supplying a patent search engine with one or more keywords, or synonyms, which are believed to most accurately identify the innovation in question. Similarly, a keyword search of non-patent publications relevant to the particular field of innovation, such as technical journals, may also be conducted for the patentability determination using such private databases as the Lexis/Nexis® database, the Micro-Patent® database, Science-Citation® database, Medline database®, the Derwent® and Chemical Abstract® databases, Smart Patent® database, California Digital Library® (CDL) database, Melvyl® database [University of California, (UC)], Orion® database (UC), National Library of Medicine® (NLM) database, Internet databases such as for example Alta-Vista®, Yahoo®, Google®, electronic journal databases such as for example American Chemical Society® Publications On-Line, American Physical Society® Publications On-line, American Medical Association® Publications On-Line, German Chemical Society Publications (GDCh®) On-Line, Verlag Chemie® Publications On-Line or other information management services. Once a list of all the relevant prior publications is formed, the patent attorney will review all the relevant patents and publications and make a determination as to whether the innovation would infringe any previous patents, and whether it is patentable in view of these prior publications. The search results are also used to determine the validity of a granted patent. It is also possible, and frequently the case, that the practitioner will redo the search selecting other keywords or search fields that may be identified from the publications or patents uncovered by the initial search or otherwise modify and repeat the search, optionally refining the search using a number of iterations. Since the keywords selected by the innovator to describe the invention may or may not be the same as words used by others to describe the same or similar inventions, this search process is necessarily iterative and uncertain.

As stated above, relying on keyword-searchable databases, such as the U.S. Patent and Trademark Office patent database, for the patent or patents most closely related to the innovation often can result in an incomplete search. First, it is often difficult to select a suitable set of keywords which accurately characterize the innovation in question and are identical to the words contained in relevant patents. In the chemical arts for example, numerous different words can be used to characterize the same material. These words can be the result of the use of different naming conventions or simply due to the use of shorthand descriptors and other phrases that have developed in the relevant art area. Also complicating keyword searching is the possibility that the relevant words may have different meanings in different context, and that certain words, especially technical terms, may be related to other words in actual or artificially created genus-species hierarchies. The result of these problems, especially the problems associated with word families or hierarchies, is that the search results may be either overly inclusive or too exclusive. The keyword search must therefore be reviewed by the innovator, an attorney or professional information scientist, having expertise in search strategies, to determine whether the search strategy used is of the same scope as the innovative concept. The search strategy may require modification and the search may need to be repeated one or more times to obtain the prior publications most relevant to the innovative concept. Alternatively, an initial overly broad search that identifies too many prior publications, not all of which are relevant, may be edited manually to narrow down the list to the most relevant publications. When the initial search is too exclusive or too narrow, relevant prior publications may have been omitted. If this deficiency is recognized during the search process a slightly broader search can be conducted. However, if the narrowness of the search is not appreciated it can lead to problems during examination of the patent application or ultimately, it can lead to a patent that is determined by a court to be invalid. If the subsequent search by the patent examiner during the examination of the patent application uncovers additional prior publications which are more relevant than those identified in the initial search, it can necessitate the applicant making significant reductions to the scope of the patent claims sought for the invention or the abandonment of the patent application. In the case where a new product is being made, used or sold, missing a relevant non-expired patent in the search can result in the unintentional infringement of another's patent rights.

Thus, keyword searches are not completely effective in quickly providing the most relevant prior publications, including patents, for use in infringement and patentability determinations.

A number of computer implemented software tools are available to aid in conducting patents searches. Recent advances in mathematical modeling of language and syntax are extremely important in this regard. For example, U.S. Patent No. 6,038,561, which has been reduced to practice in a software product called MAPIT (http://www.mnis.net/mpt.html), applies various textual analytic techniques such as word-vector analysis and subject-vector analysis to analyze patent text for consistency and to compare the patent text with other documents submitted by a user that describes an invention in question. Based thereon, a list of patent documents that are related to the innovation, as described in the concept query, is presented to the user. Similarly other search techniques that do not rely upon keyword matching are being developed. One such technique, known as Metacode® allows the user to build their own thesaurus or vocabulary. This allows the user to create taxonomies or families of terms used in a particular field, and with some training the creation of a controlled and searchable vocabulary. Another such technique for processing unstructured information uses a pattern matching algorithm based on Bayseian inference logic to identify concepts and mathematical models for ranking information. This system known as the Autonomy® system is an important advance. This system goes beyond keyword matching. The mathematical approach is language independent. By focusing on extracting key concepts rather than keywords and using an automatic retrieval mechanism for electronically capturing documents in a database which contain similar concepts, closer matches can be achieved than by using keywords alone. The system also purports to be self training or self instructing in that if the search results do not match the concept as closely as the applicant desires, such as by eliminating a retrieved publication that does not match the concept, the program will self-correct and refocus and repeat the search with the modified concept.

Another useful technique useful in performing patent searches is a software program called SmartPatent® (http://www.aurigin.com/smartpatent.html), and a related system called the Aureka® Innovation Asset Solution (http://www.aurigin.com/products, *et seq* map.html). This system uses textual analysis for organizing a collection of patents and other non-patent documents according to topic which can then be used to analyze an innovation such as to identify the relationship between those prior patents by whether or not other patents were identified as citations in subsequent patents. Yet another useful technique is software program called ClearForest® (http://www.clearforest.com), which purports to transform unstructured content into meaningful intellectual property information. The software utilizes a linguistic analysis technique for processing patents and associated documents, effectively reading the text and identifying pertinent terms thematically associated with a particular concept domain. The software performs user-driven types of analysis by associating key semantic findings with enhanced bibliographical information from individual patent publications and employs a hierarchical taxonomy structure to organize key concepts and establish relationships among them.

While each of these automated search techniques are useful, they have a number of drawbacks. One such drawback of the patent citation search technique is that although one patent may cite another patent and use the same keywords, neither of the prior patents may be truly relevant to the concept of the new innovation even though they relate to the same field and use similar words. Another drawback of these patent search tools is that they include in the search results all documents that are related to a particular topic, or a provided concept query, regardless of whether the documents would qualify as prior art to the innovation in question under the statutory requirements (35 USC §102).

As used herein the term "prior art" refers to prior publications and patents which were either published prior to an applicant or patentee's date of invention under US law as stated under 35 USC §102 (a)(e) and (g), or described in a patent or printed publication more than one year before the filing of a U.S. patent describing the invention under 35 USC §102 (b) and (d). "Prior art" for the purpose of the present invention also includes other publications or patents which meet the requirements of the patent laws of other jurisdictions (*e*.*g*. EPO, WIPO) or countries (*e.g.* JPO). Publications meeting the requirements of 35 USC §102 as described above are also useful as prior art for determining non-obviousness in the U.S. under 35 USC §103.

Both patentability and infringement determinations are also often complicated by language interpretation issues. These issues may involve the words chosen to precisely define of the innovation itself and the interpretation to be given to the words used by others to describe prior inventions. In the case of an infringement opinion the interpretation to be given to the words in the claims of existing patents and their comparison against the innovation may often require further analysis. This analysis is first limited to the intrinsic information contained in the specification of the prior patent itself including the statements made in writing during the prosecution of the application. If the meaning remains uncertain, extrinsic evidence including prior usage in the art or expert testimony may be required. In patentability and validity determinations the descriptions in all parts of patents and other prior publications are relevant for comparison to the innovation. Therefore, although the patent statutes, United States Code of Federal Regulations, Title 37 *et seq* (37 CFR *et seq*) and the common law provide the qualified attorney or agent with the legal standards and steps to be used in the patentability and infringement determinations, subjective determinations are required in reaching a final opinion on infringement, validity and patentability, such as for example in claim interpretation and the applicability and scope of the doctrine of equivalence that may be available to a patent claim.

Furthermore, it would be desirable if the search process could be more helpful in assisting in the interpretation issues involved such that multiple iterative searches and analyses are minimized and expedited. In addition to eliminating the problems associated with selecting and searching using keywords, it would also be desirable if a preliminary assessment of patentability and infringement issues could be accomplished automatically and electronically such that the innovator could obtain a preliminary assessment more quickly (via network or online on demand) and at a lower cost. A need exists, therefore, for expediting both the searching and analysis steps in the process of obtaining patentability and infringement opinions. What is needed is a more rapid means for identifying the prior publications and patents most relevant to the innovation in question regardless of the choice of keywords selected by the innovator.

Accordingly, it is desirable to provide a method and system for rapidly and accurately identifying relevant prior art for use in determining the patentability, and infringement risk associated with a particular innovation. It is also desirable once such relevant prior art is identified that a preliminary infringement and patentability determination be made. Further, it is also desirable to provide a method and system for rapidly identifying prior art for use in determining the validity of a granted patent, and for determining whether a product or process of another infringes the claim or claims of an existing patent.

While such preliminary determinations are not intended as substitutes for a final legal opinions, for reasons described herein, they can expedite reaching such opinions.

A separate issue arises in the context of determining novelty and infringement risk, namely, the inventor data or records and the form it takes. Researchers typically enter results of their research in a fixed form using bound notebooks. Notebook or inventor records refers to bound collection of numbered paper pages that is issued by a custodial authority that temporarily assigns physical control of the notebook to an inventor. The basic function of the notebook is primarily record keeping. As is well known, the United States maintains a patent system having as it basis "first to invent". In the system, there still exists situations where two or more applicants for a letters patent or an applicant and a patentee claim the same invention. In such cases, an *inter parties* proceeding known as an interference is declared to resolve the question of priority of inventorship. It is also well known that both Europe and Japan maintains a patent system having as it basis "first to patent or publish". In this system, there still exists legal proceedings including an opposition or validity proceedings that judicially resolves questions of priority of inventorship.

Typically, the notebooks of the inventor are crucial pieces of evidence used in interferences, the above-mentioned legal proceedings and other legal proceedings involving patents. For this reason, there have evolved strict requirements for the preparation and maintenance of notebooks or records. The requirements for a notebook or record consist of the following: a notebook must be bound with sequentially numbered pages; data, text, notes, and/or conclusions are entered on the pages by writing or by affixing printed documents; each page written on requires the inventor's signature and date resulting in what is referred to a signed page; each signed page must be witnessed and requires a witness' signature and the date of witness resulting in what is referred to a witnessed page, the witness further required to not be an inventor in the matter and to read and understand the witnessed page before witnessing the page; there should exist no blank pages, preventing the possibility of alteration of the notebook or record at a subsequent date; the notebook or record is accessible to any authorized person including the inventor; and the notebook or record is stored securely and securely maintained by a custodian when the inventor has relinquished physical possession to the custodian.

The system of manually keeping notebooks or records has been the standard for many years and continues to be the standard at present for secure record keeping by inventors. However, with the advent of ubiquitous personal computing systems and automated systems maintained or implemented by computers, inventors and companies are depending ever more increasingly on the use of computers for the entry, secure storage and maintenance of data and text generated for and by inventors. Currently, there is no electronic laboratory notebook (referred to as ELN) or electronic laboratory records (referred to as ELR) system available for securely entering, storing, and maintaining data, text, notes, and affixed material in a bound, fixed electronic form that meets evidentiary requirements under evidentiary requirements such as U. S. Federal Rules of Evidence [FRE (1975), sections 803(6) and 901 (b) 8]. Moreover, there is no ELN or ELR system that is commercially available, whose electronic records that reside within such a system are admissible as evidence in a legal proceeding and meets the legal requirements for proof of conception of invention and reduction of the invention to practice under 35 USC §102(g) in the U. S. Patent and Trademark Office and which are embodied in 37 CFR §1. *et seq*. Moreover, there are no ELN or ELR systems which contain permanent and unaltered records that have undergone the steps of electronic authentication and authorization by an electronic custodian, that are electronically time-date stamped and signed by both an inventor and a witness, that are electronically distributed in a limited and controlled manner to authorized parties and that are maintained and stored in an electronically fixed form so that they are unaltered or unmodified after their creation, subsequent time date stamping, and signing.

The use of standard notebooks or records has the following limitations. The archived or stored records are not readily or electronically available to other inventors and authorized persons on demand. Record keeping details associated with the archived or stored notebooks or records, such as indexing, storage and maintenance is burdensome and at times leads to loses of records, which in and of itself creates significant legal issues. Pages are not easily or conveniently deleted or added to the notebook or record. Data is not easily affixed and maintained in its present state within the notebook or record.

In view of the foregoing, it is an object of the current invention to provide a ELN system or ELR system and a method for electronically: entering data, text, and notes; affixing data, text, and notes; amending data, text, and notes; storing, maintaining and distributing such data, text, and notes in electronically fixed form which will satisfy the need for notebooks or records which are secure, signed, dated, witnessed, unaltered during storage, maintenance and after a patent application is filed on their subject matter and which meet evidentiary requirements after they are created.

Accordingly, there is a technical problem insofar as there is no data processing system available for automatically maintaining an electronic laboratory records system without requiring maintenance and/or interference by a person. Also, in the systems available, there is the problem that the information in the electronic document may be altered.

As can be taken from above, in summary, the assessment of an invention or innovation with respect to patentability or infringement is a meticulous task which requires a lot of searching which is very often carried out manually and which involves the revision of a huge amount of documents. Once relevant documents are found, it is again a meticulous task to analyze the patent, the invention, or the innovation feature by feature, and to review each relevant prior art document whether such features are disclosed or partly disclosed. Partly, these tasks may be carried out by a search engine, performing searches in online databases. These searches may be full text searches or key word searches. Also, there are search engines which indicate the relevance of the found documents with respect to the search. Such a relevance assessment is carried out by, for example, counting the amount of relevant words found in the respective documents.

For inputting the search parameters, it is possible to either key these search parameters into the search engine, or to scan the document, run an OCR program over the scanned document, and to perform a keyword search on the scanned text. This requires a significant quantity of calculating power and usually requires a lot of time to be carried out. Therefore, there is the technical problem that there is no system available which has acceptable calculating time. Also, the available systems require huge memories for storing the scanned documents.

In view of the above, it is a technical object of the present invention to provide a data processing system suitable for automatically assessing innovations with respect to patentability or infringement, and which requires a minimized storage and which requires a minimized amount of calculations.

This object is solved with the data processing system as set forth in claim 1. Due to the relevancy filter and the statutory analyzer, at a very early stage of the assessment, an amount of data used in the assessment is minimized. This advantageously allows users to minimize an amount of calculations to be carried out during the assessment. As a technical effect, heat emitted by a processor in the data processing system according to the present invention is minimized. Also, due to the relevancy filter, only relevant documents in the search result are analyzed by the statutory analyzer, providing useful reports and analysis which meets evidentiary requirements once such reports and analysis are created. Advantageously, due to this, an amount of storage capabilities in the data processing system according to the present invention is minimized, which in turn reduces a power consumption of the data processing system according to the present invention. Furthermore, the inclusion of a physical transmission network in the data processing system according to the present invention advantageously has the technical effect of further reducing the storage facilities necessary in the data processing system. Due to the transmission network, the data processing system according to the present invention may access remote databases, thus making local databases obsolete.

The above object is also solved by a method as set forth in claim 6. The method of the present invention in accordance with claim 6 advantageously provides a simple, secure and stable method, which minimizes an amount of maintenance necessary to be carried out by a person. Also, due to the minimization of the amount of calculations and the amount of storage, the method is very stable and reduces an amount of down-time of the data processing system applying this method.

In view of the above, it is another technical object of the present invention to provide a data processing system suitable for automatically maintaining an electronic laboratory records system.

This object is solved with a data processing system as set forth in claim 7. Advantageously, the data processing system as set forth in claim 7 locks the electronic document after the person who input the information signed the document. As signature, a signature, an electronic signature or any suitable authentication code may be applied. After the electronic document is signed, the information in this document is frozen or locked, such that this information cannot be altered. A second person may electronically sign as a witness. However, the second person and any subsequent person accessing the electronic document may not alter the information in the electronic document nor the date-time stamps of the signatures. Technically, the present invention as set forth in claim 7 provides for a secure data processing system allowing to protect information from being altered or manipulated. In addition, the invention provides useful electronic records which meets evidentiary requirements for legal proceedings once such electronic records are created. Accordingly, the present invention provides for a secure data storage. According to exemplary embodiments, the electronic document is locked such that the information is locked, the first signature and the first time stamp and the second signature and the second time stamp.

The above object is also solved by a method with the steps of claim 9. Advantageously, this method provides a method for securing information in a memory. Also, this method allows for the computer automated handling of information without the interference of a person. Due to the automatic information handling of this method, no person is needed to maintain the records only a defined electronic custodian, and thus, the probability of fraud is reduced and the admissibility of such records in a legal proceeding is met in accordance with evidentiary requirements. Also, due to the automatic forwarding of the locked document to the witness, the amount of time needed for maintaining the records is minimized.

A computer program product directly loadable into the internal memory of a digital computer, comprising software code for performing the steps of claim 6 or of claim 9 when run on a computer has the same technical effects and advantages as set forth above with respect to claims 1, 6, 7 and 9.

Advantageous embodiments of the present invention may be taken from the independent claims.

In the following, advantageous aspects of the present invention are described in further detail.

An aspect of the present invention is directed to a method and a system for identifying and evaluating an innovation in view of prior art publications, and more particularly to a process and a system for conducting a preliminary evaluation of the patentability and infringement of an innovation in view of prior art publications.

In alternate embodiments, the present method and system may also be useful to conduct a preliminary assessment of the validity of an existing patent or to conduct a preliminary assessment of third party infringement.

A separate embodiment according to another aspect of the present invention is directed to a method and a system for entering, amending (editing), affixing, signing, witnessing, storing, and maintaining data, text, notes, and affixed data and text in an electronically fixed form, namely in the form of an electronic laboratory notebook or record and then securely providing the contents of the notebook or record that are electronically signed by an inventor, witnessed by a second party, stored and maintained by a custodian; and that are both accessible to authorized persons for electronic distribution or on demand in fixed form and are provided in an unaltered, electronic fixed form that meets evidentiary requirements after the electronic records are created. Moreover, the signed and witnessed electronic records that constitute the ELN or ELR system are stored, maintained, audited, distributed and provided in a read only protected fixed form that cannot be altered or modified.

In all the above-mentioned embodiments, electronic records, reports and analysis are created, stored, maintained, audited, distributed and provided in a read only protected fixed form that cannot be altered or modified. The digital outcome of each embodiment is a refined set of electronic documents which are admissible in a legal proceeding, meeting evidentiary requirements and provide electronic documents that a limited number of authorized parties can securely share or access over a secure computing network or receive in a fixed form which is distributed by a custodian.

The process and the system for conducting a preliminary evaluation of the patentability and infringement of an innovation in view of prior art publications includes the steps of collecting information concerning an innovation, building a search query from said information, submitting the search query to a search engine and conducting a search, filtering the search result for relevant prior art, and charting and analyzing the filtered prior art against the search query and providing the analysis in a fixed form, preferably as an electronic document, to a user.

More particularly, a method according to yet another aspect of the present invention comprises collecting information concerning the innovation, building a search query from said information, submitting the search query to a search engine and conducting a search, filtering the search result for relevant prior art, and charting the innovation as defined by the query against disclosures in the filtered prior art and applying a statutory analyzer to said chart to determine the patentability of the innovation and generating an electronic report or analysis for authorized users.

More particularly, a method according to yet another aspect of the present invention includes determining the validity of a patent, forming a search query from the claims of said patent, submitting the search query to a search engine, conducting a search and obtaining a search result, filtering the search result for relevant prior art, charting the claims of said patent against the filtered prior, and applying a statutory analyzer to said chart to determine the validity of the patent and generating an electronic report or analysis for authorized users.

Further, a method according to yet another aspect of the present invention for determining whether an innovation infringes an existing patent includes collecting information concerning the innovation, forming a search query from the information, submitting the search query to a search engine comprising a search tool in communication with a patent database, conducting the search and obtaining a search result, filtering the search result for one or more relevant patents, charting the innovation as defined by the search query against each of the claims of the filtered patents, and applying a statutory analyzer to the claim chart to determine whether the innovation infringes one or more claims of one or more of the filtered patents and generating an electronic report or analysis for authorized users.

According to yet another aspect of the present invention, there is provided a system for identifying and evaluating an innovation in view of prior art publications including a user interface, a query builder in communication with an interactive search engine and the user interface, the interactive search engine comprising a plurality of search tools in communication with at least one document database, a relevancy filter in communication with the search engine and the user interface, a charting engine in communication with the relevancy filter and one or more document databases, and a statutory analyzer in communication with the charting engine, a statutory database and the user interface. The system provides an electronic documents in the form of reports or analysis summaries for authorized users.

Accordingly, according to yet another aspect of the present invention, there is also provided a system for identifying and evaluating an innovation in view of prior art publications including a user interface, a query builder in communication with the user interface and an interactive search engine, the interactive search engine comprising a plurality of search tools in communication with at least one document database, the document database including at least one patent database, a relevancy filter in communication with the user interface, a charting engine in communication with one or more document databases, and a statutory analyzer in communication with a statutory database and the user interface. The system provides an electronic documents in the form of reports or analysis summaries for authorized users.

In an exemplary embodiment of the method according to yet another aspect of the present invention, the step of forming a search query describing the innovation includes the step converting the search query into one or more proposed claims using a claim construction means.

In a preferred embodiment of the system according to an aspect of the present invention, said search engine comprises a plurality of search tools operating in combination.

In an exemplary embodiment of the system for conducting a patentability determination as well as for conducting an infringement determination according to an aspect of the present invention, the document database comprises at least one patent database and at least one non-patent database, and furthermore in the system for conducting a patentability determination, said document database further includes the Internet.

Accordingly, according to an aspect of the present invention, a novel method and system are provided for identifying relevant prior art to an innovation and conducting a preliminary assessment of the patentability and infringement of the innovation in view of the prior art.

In a separate embodiment according to another aspect of the present invention, there is provided a method and a system for entering, amending (editing), affixing, signing, witnessing, storing, and maintaining data, text, notes, and affixed data and text in an electronically fixed form, namely in the form of an electronic laboratory notebook or record and then securely providing the contents of the notebook or record that are electronically signed by an inventor, witnessed by a second party, stored and maintained by a custodian; and that are both accessible to authorized persons for electronic distribution or on demand in an electronically fixed form and are provided in an unaltered, electronically fixed form that meets evidentiary requirements.

According to another aspect of the present invention, the includes invention comprises the features of construction, combination of elements and arrangement of parts that will be exemplified in the following detailed disclosure, and the scope of the invention will be indicated in the claims. Other features and advantages of the invention will be apparent from the description, the drawings and the claims.

### DESCRIPTION OF THE DRAWINGS

For a better understanding of the invention, reference is made to the following description taken in conjunction with the accompanying drawings, in which:
FIG. 1 is block diagram of a system for evaluating an innovation in light of prior art according to the present invention.
FIG. 2 is block diagram of a electronic notebook system or electronic records system according to the present invention.

### DETAILED DESCRIPTION OF THE PREFERRED EMBODIMENTS

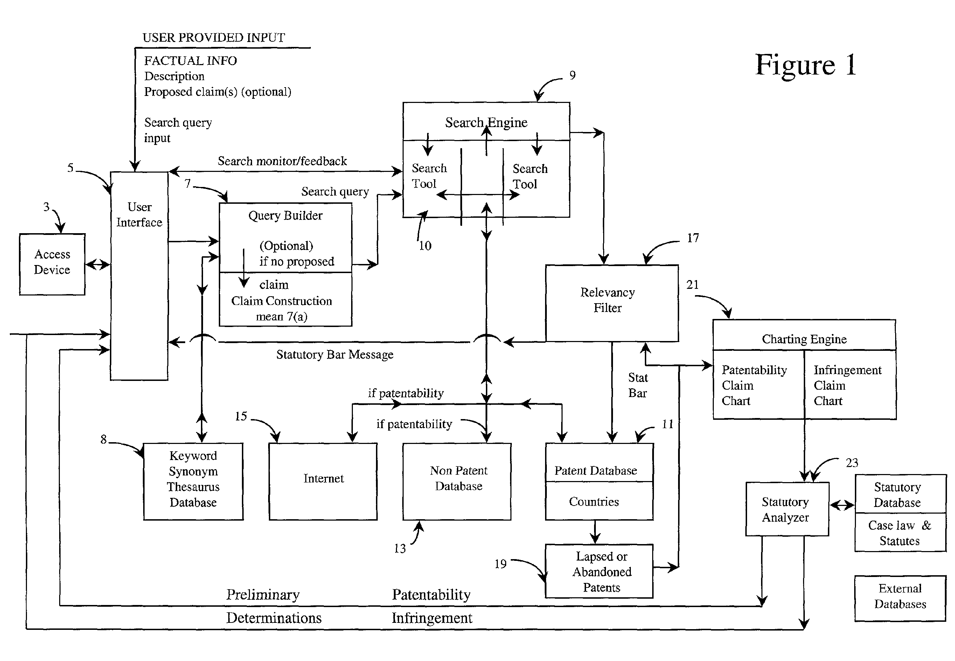

Referring now to FIG. 1, there is shown a system 1 for evaluating an innovation in light of publications, in accordance with the present invention. System 1 may be used to evaluate the innovation for possible infringement of non-expired, in force patents in light of the claims of such non-expired, in force patents as well as patentability in light of the disclosures in prior art publications.

A user desiring to evaluate a particular innovation accesses system 1 via an access device 3 that may be, by way of non-limiting example, a personal computer. In one embodiment, system 1 is a software program that executes on a personal computer that is operated by the user. In another embodiment, system 1 executes on a remote device and the user accesses system 1 on the remote device by connecting access device 3 to the remote device via a communications medium such as, for example, the Internet.

Initially, upon accessing system 1, access device 3 interfaces with a user interface 5 which receives from the user certain basic information concerning the innovation that will serve as the parameters for the desired search query and relevancy filter. The user will specify whether he is seeking a determination of patentability, infringement or both. In the case where the innovator is seeking a determination of patentability, the statutory bar portion of the relevancy filter will operate on the background information provided by the user before any additional process step of this invention, such as for example a search is conducted. In the event that no statutory bar presently exists the process of this invention will proceed. In order to initiate a search, the user, operating access device 3, provides user interface 5 with a description of the innovation to be evaluated. The description provided by the user can be of any length and in any format so long as it sufficiently describes what the innovator believes to be the innovative aspects of the innovation. A qualified patent attorney or agent may assist the innovator in providing this basic information if the innovator has trouble expressing the inventive concept in clear terms or steps. The most preferred description of the innovation useful as input into the present process takes the form of a proposed independent patent claim or claims describing the essential elements of the innovation. In the event the innovator does not chose to receive assistance to draft a claim or draft a claim, the claim construction means (7a) is useful for creating a draft claim. One or more independent draft claims are constructed by the claim construction means based on the description provided by the innovator. In providing the description the innovator is led through a series of structured questions directed to the operation of the innovation. The answers are provided as a description of the innovation to the claim construction means. The description will state the problem that the innovator attempted to solve by this innovation, and the means the innovator identified for solving the problem. The degree of explanation of the solution should be in such detail such that one of ordinary skill in the art can understand what is encompassed by the innovative concept. In order to accomplish this, the description must describe what the innovation is, namely what type of a statutory type of invention the innovator believes the invention to be, what the innovation does and the result accomplished by the innovation, how it accomplishes that result, and the key features of the innovation that the innovator believes distinguish the innovation from anything that has come before. The description of the innovative concept should be described as broadly as possible using appropriately descriptive words and phrases including all alternative phrases and any useful keywords, the inventor believes accurately describes the underlying innovative concept. In addition, the innovator should also describe the invention in more specific, narrow and exact and precise ways, such as for example describing each element of the invention and how each element operates with other required elements to achieve a result. The innovator should describe the possible statutory class or classes of the innovation, namely whether the invention is a new compound, a new composition or combination of known elements, a new process for making a compound or composition, a new method of using or applying a known or new compound or composition, or a new article of manufacture or an improvement to any of the foregoing. The innovator should define the minimum number of required elements of the invention needed to carry out the invention.

In addition to the above, the innovator needs to provide certain background factual information concerning the innovation, namely the earliest date that the innovator can demonstrate as being the date that he first thought or conceived of the innovation, the steps the innovator has taken to reduce the invention to practice, if that has occurred, as by completing a working model or a successful experiment, whether and when the inventor has told others about his innovation, and when if at all the innovator has sold or offered the innovation for sale. This background factual information is directed to a relevancy filter as described further hereinafter. In the event the information so provided to the relevancy filter program evidences that the innovator has committed an action that constitutes a statutory bar to patentability under 35 USC §102, the relevancy filter will send a message to this effect to the user interface.

Typically corporations and law firms routinely utilize written invention record forms or patent disclosure documents to collect background information concerning the innovation from the innovator. These invention records or patent disclosure documents may be formatted, programmed and converted to electronic documents for use in the present invention provided they obtain the desired degree of information from the innovator concerning the facts surrounding the innovation, which will be routed to the relevancy filter, and address the problem and solution description of the innovation in accordance with the enablement requirements of 35 USC section §112 as required by the query builder as described hereinafter.

In the situation where the innovator or patent attorney or agent does not provide one or more independent claims, the claim construction means (7a) will utilize the description of the innovation as input to create one or more independent claims from the description so provided. The claim construction means will first define the innovation in terms of each of the possible statutory types of inventions in independent claim format. Each claim will contain a preamble, defining the statutory class of invention, plus a brief statement of one or more of the elements required to operate the innovation. Each claim shall be no more than one sentence in length. The claim construction means will describe each claim element using the innovator's choice of words. Each claim element will be described in relation to one or more of the prior elements using proper antecedent basis. The claim construction means will also utilize any diagrams or schematics submitted by the innovator to describe the proper sequence of actions or alternative sequences in a method or process claim. The principal object of the claim construction means is to identify the statutory class or classes of invention and the minimum required elements of the innovation in proper sequence for the purpose of this invention. It is desirable that the draft claim contain the minimum number of elements necessary to carry out the concept as described. The claim constructor means is an expert system software program that utilizes the rules of patent claim construction found in the Manual of Patent Examination Procedures (MPEP) and one or more standard patent texts or instructional manuals, such as those published by the Patent Resources Group® or the Patent Law Institute®. The claim construction means applies conventional pattern matching algorithms to the description of the innovation to arrive at the basic concept of the innovation in the resulting claim or claims.

The claim construction means utilizes standard, accepted independent claim format structures such as for example template claims selected from prior patents of each of the statutory classes of inventions, and rules of claim construction, such as single sentence and antecedent basis . The information contained in the description is provided to the claim construction means which selects the information necessary to construct independent claims using the template structure and rules. The claim construction means will define at least one independent claim or claims selected from the group the statutory classes of inventions defined in the statute (35 USC §101) along with the formal rules relating to claim construction. The independent claim or claims so constructed are intended to serve as search query and are not intended as a substitute for the final claims in a patent application in the event that patent protection is subsequently sought. If a patent attorney or agent desires to create a claim based on the description provided by the inventor, this claim may be preferably be used in place of the claims prepared by the claim construction means.

If the search has as its objective to determine the patentability of the innovation or of a particular aspect or portion of an innovation, then the query concept input should include at least one proposed claim or constructed claim and a description of the required elements of the invention along with a statement that identifies whether the innovator believes the innovation to contain a new element, or whether a new element is being added to older elements, or whether all the individual elements are old but are being used together in a new manner. The expert system will identify the new element if the invention is an improvement, whether the invention is a combination invention or a new use for an old product to assist the claim construction means and in the search. In addition, the system usefully creates and provides an electronic documents in the form of reports or analysis summaries for authorized users.

In a preferred embodiment of the claim construction means and search query, if the search has as its objective to determine whether the innovation or a specific portion of the innovation or activity related to the operation of a particular aspect of the innovation may infringe a prior patent, then the query concept input will contain a description of that aspect or those aspects of the innovation or activity for which the specific infringement search is desired.

In those instances where a new element or a new use for an existing material is desired to be searched, the claim construction means will identify the new element or new use so that the search will focus on the new element or use. While the claim construction means will create the draft claim or claims, the search engine will be specifically alerted to search for the new element or use in the context of the draft claim or claims. In addition, the system usefully creates and provides an electronic documents in the form of reports or analysis summaries for authorized users.

In addition to the one or more independent draft claims, the information provided to user interface 5 contains the additional description of the innovation describing the required elements, how they interact, and possible alternative configurations or embodiments directed to the innovation. This additional description may be in the form of a draft patent application or in the form of electronic documents, such as reports or analysis summaries, which are provided to authorized users.

Aside from providing to user interface 5 the search query input describing the innovation, the user also provides factual information, necessary for the subsequent relevancy filter step, including the earliest date on which the innovation was conceived and, if applicable, the date on which a patent application directed to the innovation was filed with a patent office such as, for example the U.S. PTO, if such date is prior to the date of the search. If a patent application was not filed previous to this search, the innovator should state the earliest date that a working model or experiment demonstrating the invention was completed if at all. The factual information should also include the earliest date, if one exists, whereby the innovation was placed in public use or was known by or disclosed to another person who was not subject to binding obligations of confidentiality, and the date or dates that the innovation was sold or offered for sale to another, and the country or countries where this offer or sale took place. In addition, the query concept input should also identify the country or countries where the innovator desires to manufacture, use or sell the innovation. This factual information is used in the relevancy filter for patentability assessment by establishing the date of invention for determining whether patents or other publications qualify as prior art under 35 USC §102 and whether the innovator has taken any action that creates a statutory bar to patentability under 35 USC §102 as of the date of the search. This factual information is transmitted directly from the user interface to the relevancy filter.

System 1 also includes a query builder 7 that receives from user interface 5 the query concept input including the description of the innovation, the constructed draft claim or claims created by the claim constructor means, and the proposed claim or claims, and converts the query concept input and claim or claims into a final query to be used in the search, as will be discussed below. Query builder 7 may process the query concept input information in a number of ways. One way is to simply use the claim or claims as submitted; another is to utilize the constructed claim and the claim submitted by the innovator. In another embodiment, in addition to the proposed claim or claims, and the constructed draft claim or claims, the query may also include the specific improvement or new use identified by the innovator as being the new contribution.

In one embodiment, the query builder first selects keywords from the query input. These keywords are selected from the input information primarily on their frequency of use of certain words in the query. The query builder 7 then accesses one or more databases (8) useful for selecting synonyms and alternative phrases or words related to the keywords, such as those technical terms that are in a recognized species genus relationship to the keywords. These databases may include existing any existing technical dictionary, thesaurus, any controlled vocabulary created by the innovator or any combination thereof. Any synonyms or related keywords resulting from this step are then added to the query. In addition, all electronic records relevant to each query can be securely saved and later audited.

Query builder 7 then generates a search query by adding these synonyms and related words to the query input and claim or claims. The query builder selects keywords from the query input and claim or claims using an algorithm or algorithms that search for nouns that are used the least often in the query input. These algorithms are well known to those of ordinary skill in the art of search engine software programming. The thesaurus operates on these keywords and identifies synonyms and other keywords that are related to the query input words in question. The thesaurus may also identify additional keywords that are in a species to genus or genus to species relationship to the keywords from the query input. For example, if the query input includes a keyword "car," query builder 7 may add to the description the word "vehicle." In addition the query input builder will also add the following keywords, "internal combustion engine", "automobile", all the various types of cars, such as for example sedan, convertible, SUV, van, Indie car, racing car, and other types of vehicles such as trucks, busses, tractors, etc. Techniques for identifying keywords in a selection of text, such as the description, are well-known and may include the steps of eliminating common words such as "and" and "the," calculating the frequency of words used in the description and comparing the words in the description to word frequency list. The Metacode® software Informatica® is an example of an existing software program useful in creating a controlled vocabulary from the keywords and databases it searches for this step in the process.

In a more preferred embodiment, in addition to selecting keywords from the query input, the query builder also generates a concept statement by submitting the detailed description and the proposed claims and constructed claim or claims, keywords and synonyms and related terms to a query builder that utilizes concept matching algorithm, such as for example one similar to the Bayesian inference algorithm employed in the Autonomy system. In this manner in addition to the proposed claim or claims, constructed claim or claims, and keywords, a concept statement is also included in the electronic search query.

After forming the search query based on the description received by user interface 5, query builder 7 forwards the search query to a search engine 9, comprising a plurality of search tools (10), for locating publications from one or more document databases that match the query. Search engine 9 searches one or more of the document databases (11, 13 and 15) for relevant publications by comparing the query received from query builder 7 to documents found in one or more of the databases. The databases searched by search engine 9 may be either a database located adjacent a computer that executes system 1 or a database that is remotely accessible by system 1, such as for example the Internet, or both.

Search engine 9 may use any suitable method for identifying documents in databases 11, 13 and on the Internet that match the search query provided by query builder 7, including, by way of non-limiting example, textual analytic techniques such as word-vector analysis, subject-vector analysis as well as natural language techniques such as syntactic parsing, morphological and semantic analysis, and word sense disambiguation, as is well-known in the art. In an exemplary embodiment, search engine 9 uses a matching algorithm based on Bayesian probabilities that identifies and encodes a unique "signature" that represents the query and searches for documents in databases 11, 13 and on the Internet that are similar based on the signature of such documents. (See http://www.autonomy.com/autonomy/dynamic/autopage366.shtml). Thus, using these or any other suitable matching techniques, search engine 9 identifies documents contained in databases 11, 13 and the Internet that are similar to the innovation in question.

It is preferred that the search engine (9) comprise a plurality of search tools, preferably a keywords search tool and at least one concept matching search tool, as described above, in combination. In the preferred search case, a concept search tool is used in combination with the keyword search tool, such that the entire search query containing the query keywords and concept statement resulting from the query builder and proposed and constructed claims, are submitted as input data to the concept search tool. This search tool creates a refined concept query for submission along with the rest of the search query to the databases. During this process the innovator may monitor the search process through the user interface 5 and engage directly with the search process. The user interface and document database permits the innovator access to the text of the documents identified in the search during the search. The innovator may thus review the documents so selected, and may select the entire document, highlight a relevant select a portion thereof, reject the document as not relevant, or provide a ranking to the publications in order of relevance to the innovators basic concept. This feedback information may be provided through the user interface back to the concept search tool so as to provide real time assistance and additional input to the search tool to refine the search in real time. The concept search tool thus uses this information to create a revised search query, also referred to herein as a refined concept, and automatically resubmits the revised concept to one or more database or databases as input, and the search tool repeats the search as so modified. This process may be repeated in this manner until the innovator is satisfied that the documents so identified by the search most closely match the innovator's intent. When the innovator is pleased with the results, the revised search, alone or in combination with the initial query input, may be used as the final search query for submission to other document databases.

Search engine 9 accesses certain types of databases depending on the particular search desired. For example, if the search is to determine the risk of infringement associated with a particular innovation only and is not concerned with patentability, then search engine 9 submits the query to an issued patent database 11. If a patentability search is also desired, in addition to searching issued patent 11 database for relevant patent publications, search engine 9 also searches at least one non-patent publication database 13 for non-patent publications that match the query provided by query builder 7 or the revised search. Non-patent publication database 13 may include, by way of non-limiting example, technical articles or news articles published in the field of the innovation in question. Sources of such non-patent publications may include, for example, the IBM Technical Journals (http://www.research.ibm.com/journal/) or Lexis (http://www.lexis.com/). In addition, search engine 9 may search the Internet 15 for matching internet publications.

Once the search result of documents is formed by search engine 9, search engine 9 forwards the search result to a relevancy filter 17. In addition to the search results the factual background information provided by the innovator to the user interface is provided directly to the relevancy filter for a determination as to whether the innovator has admitted to an action or actions that constitute a statutory bar to patentability under 35 USC §102 such as a prior disclosure, publication or sale of the innovation more than one year before the date of this search if no prior patent application had been filed to avoid such a bar, or whether such action or actions will constitute a bar by a specific date in the future. If the innovator identifies in responding to the structured questions set forth in the data input step that he is interested in a patentability determination and not an infringement determination, and if a statutory bar in the US already exists, the relevancy filter will send a message to the user interface to this effect and discontinue the search process. In the event a statutory bar will occur in the future by a date certain if a patent application is not filed by that certain date, a bar date message will be sent to the user interface but the search will continue.

In addition to determining whether a statutory bar to patentability exists, there are several other purposes served by the relevancy filter step. In the case of an infringement determination the relevancy filter eliminates from the patents identified in the search those patents which are expired, those which have become lapsed for failure to pay the required maintenance fees and those that may have been finally declared invalid or unenforceable by a court of competent jurisdiction. In addition the relevancy filter will eliminate patents which are issued in countries that the innovator is not interested in making, using or selling the innovation. In the case of a patentability determination, the relevancy filter will eliminate from the search those publications which were uncovered by the search but do not qualify as prior art under the statute 35 USC §102.

Relevancy filter 17 receives from user interface 5 the factual background information from the search query, namely the conception date and filing date, if applicable, of the innovation in question, and the country or countries in which the innovator intends to manufacture, use or sell the innovation. This serves to eliminate granted in force patents in countries where the innovator does not desire to make, use or sell the innovation.

With respect to an infringement search, relevancy filter 17 filters the search results to eliminate those patents that the innovation cannot infringe. For example, relevancy filter 17 calculates the expiration date for all the patents included in the search result and eliminates from the search result all patents that have expired before the innovation has been practiced. In addition, the system usefully creates and provides an electronic documents in the form of reports or analysis summaries for authorized users.

Relevancy filter 17 accesses an abandoned and lapsed patent database 19 to determine which patents contained in the search result have been abandoned, for example, for failure to pay maintenance fees. Relevancy filter 17 then eliminates these abandoned patents from the search result. Thus, relevancy filter 17 produces a filtered search result of down to only those patents which are prior art, non-expired and in force. The relevancy filter sends information from the search results concerning information on the first page of the patents identified by the search, namely patent numbers dates and disclaimers if any, to governmental databases, such as for example in the United States Patent and Trademark Office and Federal Register, that maintain information on the status of granted patents. This status information includes whether the patentee or assignee has paid maintenance fees as required or whether the patent has lapsed for failure to pay such fees. In addition to determining whether the patent has not lapsed, the database contains information concerning whether the patent term has expired sooner than would be otherwise calculated from the issue date in accordance with the rules such as by the filing of a terminal disclaimer. Reissue certifications and reexamination certifications that may modify the scope of the original patent claims will also be identified in this manner and are useful in the search and matching steps if such patents are not uncovered initially by the search step. In addition it is preferred that the relevancy filter be linked to a database of recent court decisions to determine whether the patent or patents in question have been held invalid or unenforceable. Similarly oppositions or revocations of European patents may also be determined by linking to the European Patent office or the individual patent offices of European states. In addition, the system usefully creates and provides an electronic documents in the form of reports or analysis summaries for authorized users.

In addition to eliminating patents that the innovation cannot infringe based on patent expiration and abandonment, it will be obvious to one of ordinary skill to have relevancy filter 17 eliminate those prior art patents that the innovation cannot infringe for other reasons such as, by way of non-limiting examples, the First Inventors Defense, or a decision of priority adverse to the patentee or a decision not to grant a reexamination certificate to the patent in the U.S.

With respect to a patentability search, relevancy filter 17 uses the relevancy input data from the user interface, namely the conception date and filing date, to filter the search result documents by eliminating those documents contained therein that do not qualify as prior art against the innovation in accordance with 35 USC §102. For example, if the date of the innovation is January 1, 2000, then relevancy filter 17 includes in the search result only all those patents that have a filing date before January 1, 2000, and all non-patent publications that were published before January 1, 2000. Relevancy filter 17 also includes in the search results all published documents having a publication date more than one year before the current date of the analysis. The date of the search serves as a substitute for the earliest effective filing date of a patent application directed to the invention in accordance with 35 USC §102 (b) and (d) (or the equivalent EPO, JPO or WIPO regulations) if no patent application has been filed before that date. In the event a patent application filing date in the near future is certain it should be used as input in the description of the innovation for relevancy filter purposes. Relevancy filter 17 excludes from the search result those publications having a date after the conception date of the innovation and less than one year before the current date, again the current date substituting for the filing date of the patent application directed to the innovation if no other filing date is submitted. Thus, relevancy filter 17 forms a filtered search result that eliminates those documents from the search result that cannot constitute prior art based on the conception date and filing date of the innovation in question.

Although the description above was limited to filtering the search result in accordance with 35 USC §102 (or the equivalent EPO, JPO or WIPO regulation), it will be obvious to one of ordinary skill to have relevancy filter 17 filter the search result of documents according other statutes and regulations in the United States and other jurisdictions.

Accordingly, relevancy filter 17 eliminates patents that contain similar keywords or concepts to the search query, as determined by matching engine 9, but which cannot be used as prior art against the innovation for the purpose of determining infringement. With regard to patentability the relevancy filter will not exclude prior art patents which are expired or have been abandoned. In this way, system 1 provides the user a comprehensive yet focused set of prior art for evaluating the patentability and infringement associated with the innovation.

Relevancy filter 17 then forwards the filtered search result to a charting engine 21 that prepares one or two claim charts for the purpose of charting an initial patentability and infringement analysis respectively. For a patentability determination, the charting engine selects each of the proposed independent claims or the constructed draft claims developed according to the claim construction means as the template against which the search results will be matched. For an infringement analysis the charting engine will select the independent claims of each of the filtered patents as the template against which the innovation will be matched.

The claims are charted as is conventionally done in litigation before the Court of Appeals for the Federal Circuit (or the equivalent and/or relevant EPO or JPO Court), such that element of a claim or operative element of a claim element is given a separate line in a column, preferably the left hand column. Next the charting engine creates a chart that is formatted for display to the user via user interface 5 into which the claim elements and operative elements are formatted. Next the charting engine extracts the specific descriptive information, preferably the word, words or phrases that are used in each of the filtered search documents in the case of a patentability determination which most closely match each of said claim elements or portions thereof of the proposed or constructed and charted claim. The results are created and provided as electronic documents in the form of reports or analysis summaries for authorized users.

The relevant information of each filtered prior art publication is preferably accompanied by a cite identifier to the location or locations in that document where that element is located.

In an exemplary embodiment relating to a patentability determination, charting engine 21 receives from matching engine 9, via relevancy filter 17, a reference to those sections of the documents in the filtered search result that match all or a portion of the query. In this case, charting engine 21 includes those sections of the documents in the display format to be presented to the user. In addition to a cite identifier that identifies these locations, charting engine 21 may also include in the display format the text of those section of the documents adjacent to each relevant claim or constructed claim element of the innovation. In this way, the user, upon viewing the display format generated by charting engine 21, can directly compare the claims of the innovation to the exact sections of the prior art documents in the filtered search result that were found to be a match by matching engine. The results of the search are created and provided as electronic documents in the form of reports or analysis summaries for authorized users.

In an exemplary embodiment, charting engine 21 extracts the title of each of the documents in the filtered search result as well as the publication date and author, for non-patent prior art, and the patentee, filing date and issue date for patent prior art and organizes the documents in the filtered search result around this extracted information. In addition to this extracted information, it will be obvious to one of ordinary skill to have charting engine 21 extract other information from the documents in the filtered search result for display to the user. The search results are created and provided as electronic documents in the form of reports or analysis summaries for authorized users.

The cite identifier identifies the location or locations of the page and line number of the filtered publication where the matching word, words or phrases are located in the filtered document. The information and cite identifier of a first filtered publication are then formatted into a second column under the heading of the relevant publication title or patent number. This second column contains space for the extracted information and cite identifier to be placed on a line adjacent to the line of the claim that it most closely matches. This is repeated for each of the filtered publications in subsequent separate columns or in a separate chart, if space does not permit, following the same format as described above. The result of the patentability charting step is the construction of a claim chart that matches the claim elements and operative portions thereof to the matching portions of the relevancy filter publications. The results are created and provided as electronic documents in the form of reports or analysis summaries for authorized users.

A similar operation is conducted for infringement determinations however the charting engine 21 utilizes the claims of the filtered prior art patents as the template and the words or phrases of the description of the innovation as the matching portion. This step is repeated for each prior art patent.

This charting step has referred to independent claims, however, the charting engine may be expanded to deal with dependent claims as well. In order to accomplish this the charting engine is modified to rewrite every dependent claim in the prior art patents as independent claims substituting the dependent portions into the independent claim from which it depends. For patents with a few single dependent claims this does not add significant time or expense but if the prior art patent contains many dependent claims dependent on other dependent claims or multiple dependent claims the charting engine may not be able to accomplish the charting in a reasonable period of time to be useful.

After the claim chart or charts are constructed the patentability and infringement rule step is performed by the statutory analyzer 23. The analyzer will perform an analysis of patentability using the patentability claim chart or charts and an infringement analysis using the infringement claim chart or charts.

In all the above-mentioned embodiments, electronic records, reports and analysis are created, stored, maintained, audited, distributed and provided in a read only protected fixed form that cannot be altered or modified. The digital outcome of each embodiment is a refined set of electronic documents which are admissible in a legal proceeding, meeting evidentiary requirements and provide electronic documents that a limited number of authorized parties can securely share or access over a secure computing network or receive in a fixed form which is distributed by a custodian.

The following describes the patentability analysis. This analyzer utilizes the patentability claim chart and the factual information provided in the search query to arrive at a preliminary assessment of novelty under 35 USC §102 (or equivalent novelty statutes and regulations in the EPO, JPO and WIPO). The claim or claims of the innovation are compared against the disclosures of each of the prior art publications. The analyzer determine whether any single prior art publication contains each and every element of the proposed claim or constructed claim of the innovation. In the event that a complete match of each claim element with a corresponding element in a prior art patent is made, the analyzer will provide the user interface with the title of the publication or patent number as possibly constituting a novelty bar to patentability under 35 USC §102 (or equivalent novelty statutes and regulations in the EPO, JPO and WIPO). In the event a single prior art publication is missing one or more required elements of any proposed or constructed claim, the analyzer will provide the user interface with the identity of the element of the proposed claim that is novel and the identity of the filtered prior art publications.

In the case of infringement analysis a subset of the relevant prior art publications are used, namely only those in force and non-expired patents in the country or countries in question.

In the case of infringement the analyzer will determine whether each and every element of the claims of the filtered prior art patent in the chart is met by a word or phrase in the description of the innovation. In the event that each element of the innovation is contained within the elements of the claim chart, the user interface will be notified of the existence of the patent. The analyzer will be programmed to appreciate the open ended and closed ended set theory embraced by such terms as "comprising" and "consisting of" respectively as used in the patent claims. The analyzer must also be programmed to recognize sequences of steps in a publication such that even if the same elements exist the analyzer will determine if they occur in the same sequence particularly in a process claim Thus even if every element of the proposed or constructed claim does not match against an element in the claim chart of a prior art patent if the elements of the patent claim encompass the elements of the proposed innovation claim a preliminary infringement determination will be sent to the user interface. When each of the claim elements of a prior art patent find an exact match with a corresponding element of the proposed innovation there is a real risk of infringement and for the purpose of this invention it may be said that a preliminary determination of literal infringement exists.

If on the other hand, one or more elements of the prior art claim is not matched by a in the innovation it should not be concluded that infringement does not exist. One should not rely upon this determination and proceed as if a legal opinion of non- infringement was rendered but it does serve as the starting point for a legal opinion. The digital outcome in the form of a created report or an analysis summary is a refined set of electronic documents which are admissible in a legal proceeding, meeting evidentiary requirements and provide electronic documents that a limited number of authorized parties can securely share or access over a secure computing network or receive in a fixed form which is distributed by a custodian.

In a more preferred embodiment of the analyzer step the availability of the doctrine of equivalence for determining infringement may be determining from an analysis of the file wrapper of the prior art patent or patents in question. In this regard each claim of the prior art patent is matched against the corresponding claim in the application as originally filed. The analyzer is linked to the patent application file history if available electronically. If such a linkage can be made and a correspondence between the claims can be determined by the program, such as initially by back tracking from the numbers in the granted patent through previous amendments to the original patent application, the analyzer can determine whether any amendment has been made to the claim at issue. If any amendment has been made to the claim as originally filed, the user interface is notified that the doctrine of equivalents may not be applicable to those claims in accordance with the recent case law (Festo Corp. v. Shoketsu Kinzoku Kogyo Kabushiki Co., 234 F.3d 558 (Fed. Cir. 2000), 520 U.S. 1111). If no such amendments have been made to the claims of the prior art patent, the user interface will notify the user that the doctrine of equivalents may be available to the claims. The user will be instructed to request the attorney to consider the applicability of the doctrine of equivalents to the preliminary infringement determination. The digital outcome in the form of a created report or an analysis summary is a refined set of electronic documents which are admissible in a legal proceeding, meeting evidentiary requirements and provide electronic documents that a limited number of authorized parties can securely share or access over a secure computing network or receive in a fixed form which is distributed by a custodian.

At this point in the present invention the user will have a preliminary assessment of novelty to aid in a patentability determination and a preliminary determination of literal infringement along with a guide for the applicability of the doctrine of equivalence. The only significant issue remaining for a final patentability determination is the question of obviousness under 35 USC §103. Since this is a subjective determination which may involve the interaction between teachings and suggestions of more than one prior art reference it is not believed to be within the skill of one of ordinary skill in artificial intelligence programming to be adequately be not adequately enabled at the present time.

Accordingly, a method and system is provided for identifying relevant prior art for use in determining the patentability and infringement risk associated with a particular innovation. The method and system receives a description of the innovation and generates a query that is used to search for and identify prior art documents that are similar to the innovation and alert the innovator of statutory bars to patentability The present invention also filters out from the search results documents that cannot be used as prior art against the innovation - either for patentability or infringement. In this way, the present invention a comprehensive yet focused set of prior art for evaluating the patentability and infringement risk associated with the innovation. Finally, the present invention presents the filtered search results in a format that aids a user in determining the patentability and infringement risk associated with the innovation. The digital outcome of the filtered search is in the form of a created report or an analysis summary is a refined set of electronic documents which are admissible in a legal proceeding, meeting evidentiary requirements and provide electronic documents that a limited number of authorized parties can securely share or access over a secure computing network or receive in a fixed form which is distributed by a custodian.

It will thus be seen that the objects set forth above, among those made apparent from the preceding description, are efficiently attained and, since certain changes may be made in carrying out the above process, in a described product, and in the construction set forth without departing from the spirit and scope of the invention, it is intended that all matter contained in the above description shown in the accompanying drawing shall be interpreted as illustrative and not in a limiting sense.

It is also to be understood that the following claims are intended to cover all of the generic and specific features of the invention herein described, and all statements of the scope of the invention, which, as a matter of language, might be said to fall there between.

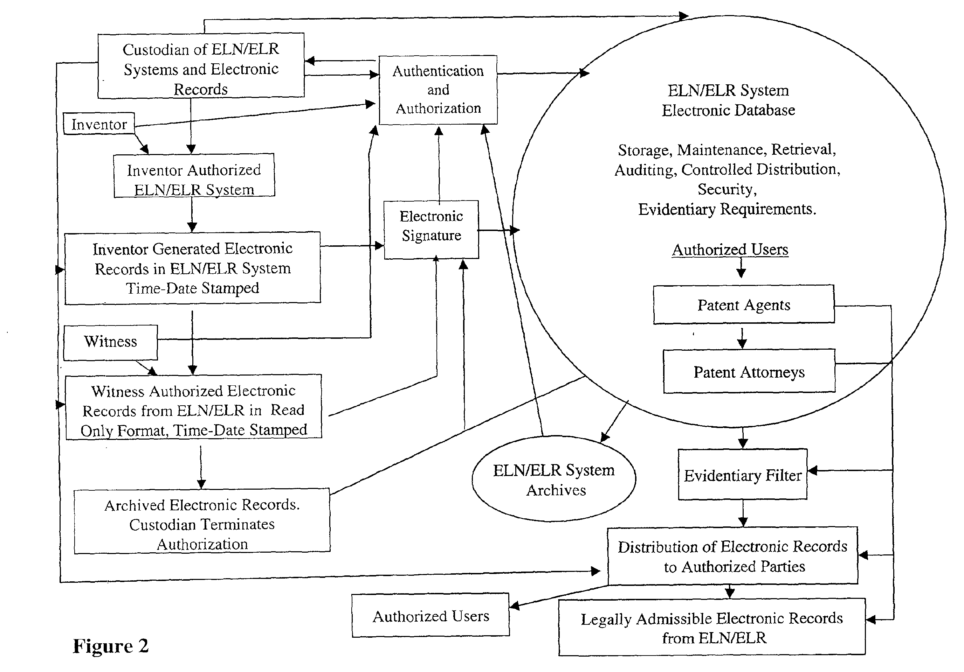

Referring now to FIG. 2, there is shown a representation of a physical architecture of a computer implemented system for entering, amending (editing), affixing, signing, witnessing, storing, and maintaining data, text, notes, and affixed data and text in an electronically fixed form, namely in the form of an electronic laboratory notebook or record and then securely providing the contents of the notebook or record that are electronically signed by an inventor, witnessed by a second party, stored and maintained by an electronic custodian; and that are both accessible to authorized persons for electronic distribution or on demand in an electronically fixed form and are provided in an unaltered, electronically fixed form that meets evidentiary requirements, in accordance with the present invention.

In step 1, at least one custodial official electronically authorizes at least one party (at least one inventor) to enter data into at least one electronic notebook. The ELN or ELR system is typically implemented using for example a desktop personal computer (PC), a laptop computer, or any other suitable electronic device having standard data entry, storage, memory and retrieval capabilities. Such a computer implemented system is referred to as an electronically bound fixed form. Typical examples include a PC running Windows® 95 or subsequent software, an Apple computer running Apple based software, any type of computer running Lotus Notes® 4.5 or subsequent software or a computer network system using an Ethernet® network connection having Transfer Control Protocol (TCP) in combination with Internet Protocol (IP), TCP/IP. It is understood in accordance with the present invention that certain computer hardware and software required by the custodian to authorize, authenticate and manage the electronic laboratory records database from a plurality of ELN or ELR systems may become obsolete and require different hardware and software to accomplish the novel elements of the ELN or ELR system and process and to practice the invention. Advantages of authenticating and authorizing inventors and other required parties have a basis in that computer hardware and software is constantly evolving and being improved and obsolete hardware and software used in implementing the invention will be replaced as required by the custodian. Electronic authentication and authorization functions implemented by the custodian ensures that all stored, maintained and audited electronic records generated will be available for extended time periods that improve on the current prior art of record. All computing systems require sufficient, partitioned memory. Memory can be usefully implemented in accordance with he invention using any suitable storage capability including but not limited to random access memory (RAM) that is semiconductor based, magnetic based memory that is tape or matrix based and optical memory that is disk based. The custodian has responsibility for authorizing and authenticating each inventor's ELN or ELR system, as well as maintaining, storing and providing the inventor's notebook in an electronically fixed form. The custodian would maintain a plurality of ELN or ELR system in a electronic database, library, archive or repository having the same requirements as the ELN or ELR systems. The custodian controls all access of the electronic database including all ELN or ELR systems. The custodian ensures that all contents or any portion thereof of the inventor's electronic records are both accessible to authorized persons for electronic distribution or on demand in an electronically fixed form and are provided in an unaltered, electronically fixed form that meets evidentiary requirements. The custodian also ensures that the inventor's electronic records were properly signed and witnessed (authentication). The custodian also authorizes and authenticates at least one witness, who understands the inventor's electronic disclosure and can electronically witness the inventor's records. The custodian also authorizes other parties to have access to the inventor's electronic records system, including for example the inventor's manager, confidential outside parties, patent agents and patent attorneys; the later two parties being either internal or external to the business enterprise or Company. In step 1, the inventor obtains full access, as authorized by at least one electronic custodian, for entering, amending (editing), affixing, and then signing, data, text, notes, in an electronically fixed form. The inventor electronically signs and dates each set of records electronically entered. Once the inventor electronically signs the records in the notebook, it is electronically date time stamped. In step 2, at least one witness obtains read only access to the inventor's electronic records system and electronically witnesses the records. The inventor may generate any portion of the electronic notebook system in a fixed form, including but not limited to printed and an electronic copies. Other authorized parties would have read only access to the inventor's electronic notebook system. The electronic custodian also may remove the inventor's access once the inventor is no longer employed by employer (legal employer or assignee of inventor). Once the witness electronically witnesses the records in the notebook, it is electronically date time stamped. All pertinent electronic inventor records from the notebook can then be electronically distributed to authorized parties including patent agents and patent attorneys for assessment of innovation in accordance with the invention. A system for time date stamping of electronic documents that utilizes third party authentication of a record's origin is described by Haber et al in U. S. Pat. No. RE 34,954. A system for digital signing (hash and digital signature algorithms), remote authentication and electronic storage of documents implementing a trusted custodial utility (TCU) and hashed combinations signatures and date-time stamps is described by Bisbee et al in U. S. Pat. No. 5,748,738. Specific areas or fields included within the electronic database of ELN or ELR systems are designated by the custodian for management, storage, auditing, controlled to limited distribution and later retrieval of the electronic records that have been created and electronically recorded. Typical fields include but are not limited to inventors name, inventor's business unit, assignee name, ownership details indicating whether they are singular entity or joint entities, research platform information, keywords, products, concepts and competitor products and intellectual property information. Any amendments or modifications by an inventor to the ELN or ELR system are automatically registered and date-time stamped. An audit trail will also be generated with any created records and/or modifications to the electronic records contained within an ELN or ELR system for a complete and total chronological history of all electronic records created.

In step 3, the custodian electronically stores, maintains the inventor's electronic notebook or records system and provides relevant portions or all of the inventor's electronic notebook or records system or authorizes parties access including for example electronic distribution or on demand in an electronically fixed form. The custodian also maintains, stores and provides the records in an unaltered, electronically fixed form that meets evidentiary requirements. All electronic records or any portion thereof contained within the ELN or ELR systems can be partitioned by fields and can be searched by the custodian and any other authorized and authenticated parties. Another advantage of authentication and authorization functions controlled by the custodian reveals any disparities of electronic signatures and allows detection of any modification of the electronic records contained within any ELN or ELR system, enhancing the credibility of the records for purposes of evidentiary requirements.

An incomplete, theoretical protocol for electronic record keeping that is intended to satisfy evidentiary requirements by requiring electronic signatures be associated with created records is described in Electronic Records Symposium, Legal Defense of Electronic Records-An Industry Perspective, Oct. 27, 1995. The inventors describe a complete and working process for electronic laboratory protocol for electronic record keeping that both satisfies evidentiary requirements and provides legally admissible electronic records that can be used in legal proceedings involving patents obtained from and having their basis in said records. The inventors have discovered, created and implemented a legally acceptable ELN or ELR system which is reduced to practice using standard and commonly available computing hardware and software. The utility of the invention is found and now can be demonstrated in legal infringement proceedings, interference proceedings and technology ownership disputes. The records from the ELN or ELR systems can be offered as evidence that is secure, trustworthy, admissible and which can stand legal challenges in a legal proceeding at a later point in time. Moreover, the electronic records are write protected and read only protected for additional security and trustworthiness in producing an unaltered evidentiary document usefully employed in a legal proceeding. The digital outcome of created and secure electronic documents with the ELN/ELR systems is a refined set of electronic documents which are admissible in a legal proceeding, meeting evidentiary requirements and provide electronic documents that a limited number of authorized parties can securely share or access over a secure computing network or receive in a fixed form which is distributed by a custodian.

The records from ELN or ELR systems may be submitted in a fixed form including for example a printout and an electronic copy from a network database, a tape or a disk described above. ELN and ELR prove who electronically created the records and witnessed them, prove when they were created electronically, prove what the content was at the time of creation, and provide a reproduction of the electronic records in a "human readable" fixed form. Legal acceptance of Electronic Records are covered by the Federal Rules of Evidence (1975) in the United States Patent and Trademark Office (U. S. PTO) and in U. S. Federal Courts. The admissibility of electronic records have been demonstrated in U. S. Case Law and are described in U. S. v. Weatherspoon, 581 F. 2d 595 (7^{th} CIR. 1978); Rosenberg v. Collins, 624 F. 2d 659 (5^{th} CIR. 1980) and U.S. v Blackburn, 992 F. 2d 666 (7^{th} CIR. 1993). In addition the USPTO has published guidelines for use of electronic records as evidence in Off. Gaz. U. S. Pat. Off., march 10, 1998.

Legal admissibility of ELN or ELR systems requires proper authentication of the record and a basis foe admissibility in a legal proceeding either as non-hearsay or under an exception to non-hearsay. No hearsay exception applies if the creator of the record admits the authorship of the electronic record, admits the record is true, and is available for cross-examination. If an entity other than the inventor (e.g. an assignee or business enterprise or Company) submits an electronic record for authentication, then hearsay rules apply in the U. S. under FRE 803(6). By the act of the electronic custodian authorizing and authenticating the inventor, the witness and other authorized users, the reliability and validity of the electronic records from ELN or ELR systems is established. Procedures employed by the custodian to continually validate electronic records in ELN or ELR systems include but are not limited to an ability to generate accurate copies of the records, an ability to ensure the accurate retrieval of records throughout record retention period in human readable form, restriction of access to the records only by authorized and authenticated parties, limited distribution, both in writing and as established policy, of the dissemination and internal distribution of the record within the entity employing all parties (Company or business enterprise). Established written policies which hold inventors that generate such records accountable for violations of rules related to governance and generation of said records, and an electronic audit trail that can track the creation, use and modification or amendment of such records. The requirements for the audit trail include but are not limited to that the records must have been made by an inventor having knowledge of the electronic entry, that the record must be maintained and kept in the course of a regularly conducted business activity, that the practice must a regular practice of the business activity to make the record and that the method or circumstances of preparation of the records should establish the trustworthiness of the records contained in the ELN or ELR systems. Trustworthiness of the records includes for example that the record entries do not themselves contain hearsay, that the records were not made for the specific purpose of litigating a legal proceeding, and that the records were made in accordance with procedures intended to ensure accuracy. The ELN or ELR systems of the present invention, satisfy all the present requirements to establish or prove inventive acts, establish routine business procedures for managing electronic records and make certain that all parties who input and access electronic information consistently follow the established procedures.

The electronic contents of any ELN or ELR system or plurality can be distributed and accessed by authorized parties simultaneously in real time in accordance with the invention. Access to ELN or ELR systems by the custodian is restricted only to authorized parties to facilitate security and trustworthiness of the records in accordance with evidentiary requirements. Notebooks can be active or inactive in the database maintained by the custodian. Inactive notebooks are electronically archived and time-date stamped when archived for auditing purposes by authorized parties. Implementation of the ELN or ELR system described herein both extends and significantly improves the capability of currently acceptable records created and maintained in paper notebooks and bound paper records disclosed in the prior art of record.

The following examples illustrate various aspects of the method of the present invention and are not meant to be limiting.

### EXAMPLE 1

### PATENTABILITY ASSESMENT OF AN INNOVATION

FACTS: ACME company believes one of its scientists, WILEY COYOTE, has discovered a way of making polyolefins from a plastic material that reacts with a metal catalyst to afford polyolefins, the innovation was reduced to practice on December 25, 1990. ACME Company, however, is a not a producer of olefin polymers and wishes to assess the innovation, in order to determine whether it is worthwhile to obtain a patent and if successful, develop or license rights to technology disclosed in the patent. A registered patent agent, S.P.D. Gonzales, performs the patentability analysis using the method of the present invention.

Input to QUERY BUILDER: elements of the invention a) reactive plastic b) metal catalyst c) polyolefin products; synonymous chemical terms describing each element, including for example resin, support, residual reactive group, single site catalyst, metallocene.

Several patent databases were searched via the internet or electronic account including: U.S. PTO web site (http://www.uspto.gov/), LEXIS-NEXIS web site (http://www.lexis.com) DERWENT, and Micropatent (http://www.micropat.com). A total of 55 patents were obtained but when passed through the relevancy filter, only 5 patents were listed on the charting engine. Non-patent databases where searched, some via internet connections or accounts, including Melvyl® (University of California), Orion® (UC), Chemical Abstracts® and Science Citation®. A total of 7 publications were listed, none of which the relevancy filter discarded and the chart engine listed. A second search query was generated from the terms of the patent and non-patent publications identified from the preliminary search.

Input 2 to QUERY BUILDER: Concept terms included supported metal catalyst, olefin polymerization, single site catalysts, Ziegler-Natta, alumoxane, silica supports, plastic supported metallocene catalysts.

Several iterations of the search were performed, none leading to any references having reactive plastic combined with metal catalyst to make pololefins. Patent Z, ZZZ, ZZZ filed July 4, 1991, was identified as the closest prior art from examination of the patent and discussions with the inventor. Claim 1 was input to the query builder.

Input 3 to QUERY BUILDER: A method for preparing a supported ionic catalyst comprising combining a metallocene component, an activator component and a catalyst support material suspended in a solvent and recovering the product a free flowing solid. A search of the claim came up with 9 redundant patents from the initial search. By applying the statutory analyzer the elements "reactive plastic" and its "reaction with a polyolefin catalyst to form a stable solid used to make polyolefins" were identified as elements not having any correlation to patent and non-patent publications listed from the patentability assessment. On the basis of the assessment report, composition of matter claims to the reactive plastic and the plastic metal catalysts were constructed. Additionally, an independent claim directed to the process of making polyolefin using the composition was also constructed. An application was drafted and the claims reviewed and analyzed by the company's co-chief patent counselors, M.E.L. Blanc and Chuck E. Jones; who after discussing and reviewing the patentability assessment and application with Wiley Coyote's managers, D. Duck and F. Leghorn, sent the application to a law firm specializing in patent cases involving polyolefins, Tom, Jerry, Sylvester & Tweedy for an independent assessment.

### EXAMPLE 2

### INFRINGEMENT ASSESSMENT OF AN INNOVATION.

FACTS: U.S. Patent No. X,XXX,XXX assigned to RISING SUN DRUGS discloses the process of making an wide spectrum antibiotic by combining an acyl group and an amino group, wherein it is claimed in addition to the process, the acyl group contains a novel side chain X which provides the wide spectrum antibacterial properties. The patent at issue is a continuation in-part that was filed on November 27, 1985, in the USPTO that claims priority to a parent application filed on June 26, 1975, and claims priority to both a US provisional application filed June 28, 1974, and a British patent filed July 4, 1974.

COMPANY DRUGS R US in 2001 has a different process for preparing generic wide spectrum antibiotics bearing the same novel side chain X and wishes to know the following:

Would the company's process literally infringe the broadest independent claim of the 'XXX patent and would they have the right to practice their process? Are there one or more publications that would disclose the antibiotic of the 'XXX patent bearing the wide spectrum side chain X? Is the 'XXX patent valid? Input to QUERY BUILDER: structure of the antibiotic, the names of chemical groups that constitute the side chain, chemical term describing the process of combining an acyl group and amino group, name of drug, class of drug, key terms from 'XXX patent.

Claim 1: A process for making a wide spectrum antibiotic comprising reacting an acyl group with an amino group wherein the acyl group further comprises side chain X.

An internet search of chemical encyclopedias, pharmaceutical references refers to the process as "acylation." The internet search accesses library databases where texts on antibiotics are listed. A total of 17 books are listed, but having input priority dates in to the relevancy filter, only 1 book was published more than one year prior to the earliest claimed priority date. The book entitled "Chemistry of Penicillins and Cephalosporins" was published in 1972 and explicitly discloses the general process of chemically combining an acyl group and an amino group to provide a penicillin or cephalosporin. It was listed on the charting engine. Several patent databases were searched via the internet or electronic account including: USPTO web site (http://www.uspto.gov/), LEXIS-NEXIS web site (http://www.lexis.com) DERWENT, and Micropatent (http://www.micropat.com). A total of 13 patents were obtained but when passed through the relevancy filter, only one patent was listed on the charting engine, U.S. Patent No. Y,YYY,YYY filed on July 24, 1970; disclosing an antibiotic structure similar to the 'XXX patent, the only difference being that acyl group was unsubstituted or was the same acyl group having side chains Y and Z rather than side chain X. Non-patent databases where searched, some via internet connections or accounts, including Melvyl® (University of California), Medline®, Chemical Abstracts® and Science Citation.® A total of three publications were listed, two of which the relevancy filter discarded and the chart engine listed as a Journal of Medicinal Chemistry article published April 1, 1973, which described the synthesis of the exact side chain X and its incorporation in to an acyl group used in preparing penicillin derivatives. The statutory analyzer found all elements of claim 1 of the process disclosed in the 'XXX patent in the 'YYY patent and the J. Med. Chem. Publication. A relevant case was located in the case law statutes that would have relevance to the statutory rules under 35 USC §103. From the generated electronic report, qualified legal professionals from the company could analyze issues of right to practice, infringement and patent validity and issue opinions to company management.

## Claims

1. A data processing system suitably programmed for automatically assessing innovations with respect to patentabiltiy or infringement, said data processing system comprising:
an interface (5) for inputting factual information concerning the innovation and a type of assessment to be carried out;
a query builder (7) connected to the interface (5) for receiving the factual information and for building a search query describing the innovation based on the factual information;
a search engine (9) connected to the interface (5) and to the query builder (7), for selecting a database (11) from a plurality of databases on the basis of the type of assessment to be carried out, accessing the database (11) from the plurality of databases via a transmission network and for searching the query in the database (11) from the plurality of databases;
a relevancy filter (17) for filtering the search result provided by the search engine (9) using relevancy criteria to form a filtered search result of prior art and outputting the filtered search result of prior art;
means for comparing the search query with the filtered prior art output by the relevancy filter (17); and
a statutory analyzer (23) for analyzing the comparison to determine the assessment of the innovation with respect to patentabiltiy or infringement of the innovation, the statutory analyzer (23) being connected to the interface (5) which automatically outputs the assessment of the innovation with respect to patentabiltiy or infringement of the innovation.

2. The system in accordance with claim 1, wherein said search engine (9) has a feedback mechanism which outputs search results via the interface and adapts the search in response to an input via the interface (5).

3. The system in accordance with one of claims 1 or 2, wherein said searching engine comprises one or more search tools selected from the group consisting of a natural language search, a word frequency search, a linguistic analysis, a concept search based on Bayesian probabilities, keywords (5), search fields (6), word and subject vector analysis (8), Metacode (8), unstructured text (8), pattern matching algorithms (8), language algorithms (8), textual concepts (8), claim construction (9), claim elements (9), language interpretation algorithms (10), language translation algorithms (11), natural language analysis (34), syntatic parsing (34), morpholigical and semantic analysis (34), word sense disambiguation (34), chemical formulas (34), metatags (34), data strings (34), thesaurus analysis algorithms (8) and combinations thereof.

4. The system in accordance with one of claims 1 to 3, wherein said plurality of databases includes at least one issued patent database containing a plurality of issued patents or at least one non-patent prior art database.

5. The system in accordance with one of claims 1 to 4, wherein said transmission network is the Internet.

6. A method in a data processing system for automatically assessing innovations with respect to patentabiltiy or infringement, said method comprising the steps of:
inputting factual information concerning the innovation and a type of assessment to be carried out;
receiving the factual information;
building a search query describing the innovation based on the factual information;
selecting a database (11) from a plurality of databases on the basis of the type of assessment to be carried out;
accessing the database (11) from the plurality of databases via a transmission network;
searching the query in the database (11) from the plurality of databases;
filtering the search result provided by the search engine (9) using relevancy criteria to form a filtered search result of prior art and outputting the filtered search result of prior art;
comparing the search query with the filtered prior art output by the relevancy filter (17);
analyzing the comparison to determine the assessment of the innovation with respect to patentabiltiy or infringement of the innovation; and
outputing the assessment of the innovation with respect to patentabiltiy or infringement of the innovation.

7. A data processing system for automatically maintaining an electronic laboratory records system, the data processing system comprising:
an input device for entering information into an electronic document which is part of the electronic laboratory records stored in a memory;
first output means for outputting a first request for requesting a first signature from a first user to be input into the electronic document;
first receiving means for receiving the first signature input by the first user and affixing it to the electronic document;
first time stamping means for automatically attaching a first time stamp to the electronic document which corresponds to the time when the first signature was input;
automatic locking means for automatically locking the information in the stamped electronic document with the first signature such that the information cannot be altered;
means for automatically forwarding the locked electronic document to a second user;
means for displaying the information to the second user;
second output means for outputting a second request for requesting a second signature from the second user to be input into the electronic document;
second receiving means for receiving the second signature input by the second user and affixing it to the electronic document; and
second time stamping means for automatically attaching a second time stamp to the electronic document which corresponds to the time when the second signature was input.

8. A system according to claim 7, further comprising:
access restriction means for restricting an access to the locked electronic document including the first and second time stamps and the first and second signatures to authorized users.

9. A method in a data processing system for automatically maintaining an electronic laboratory records system, the method comprising the steps of:
entering information into an electronic document which is part of the electronic laboratory records stored in a memory;
outputting a first request for requesting a first signature from a first user to be input into the electronic document;
receiving the first signature input by the first user and affixing it to the electronic document;
attaching a first time stamp to the electronic document which corresponds to the time when the first signature was input;
locking the information in the stamped electronic document with the first signature such that the information cannot be altered;
forwarding the locked electronic document to a second user;
displaying the information to the second user;
outputting a second request for requesting a second signature from the second user to be input into the electronic document;
receiving the second signature input by the second user and affixing it to the electronic document;
attaching a second time stamp to the electronic document which corresponds to the time when the second signature was input.

10. A computer program product directly loadable into the internal memory of a digital computer, comprising software code portions for performing the steps of claim 6 or 9 when said product is run on a computer.
